# EUROPEAN PATENT APPLICATION

(11) **EP 2 899 037 A1**
(43) Date of publication of application: **29.07.2015**
(21) Application number: 14171844.5
(22) Date of filing: 10.06.2014
(51) Int. Cl.: B43K 7/12, B43K 24/08, B43K 29/00, B43K 29/02, G06F 3/039

(54) **Gel-ink pen having screen-touch function**

(30) Priority: 22.01.2014 CN 201420039148 U
(71) Applicant: Shanghai Lees Manufacturing Co., Ltd., Min Hang District Shanghai (CN)
(72) Inventor: LI, Lei Xin, Shanghai (CN)
(74) Representative: Brown, David Leslie

(57) **Abstract**

A gel-ink pen having a screen-touch function comprises a pen-holder, a pen refill disposed inside of the pen-holder, and a screen-touch portion provided on the pen-holder, the screen-touch portion comprising a conductor having a length and provided inside the pen holder and a rubber mat which is sleeved over the bottom of the conductor and exposed outside of the pen-holder. The length of the conductor is arranged to ensure that wherever the hand of user holds on the pen-holder, the static electric charges on the hand of user can be inducted. The conductor is electroplated with a metal layer so as to realize conduction of electric charges. The conductor is provided with an assembly portion at the bottom, over which the rubber mat is sleeved, and the screen-touch portion further comprises a ferrule for fixing the rubber mat, and wherein the ferrule is sleeved over the rubber mat such that the rubber mat is partially exposed outside the ferrule so as to actuate the screen. The conductor having a length and electroplated with a metal layer is integrated into an interior of pen holder of the gel-ink pen, achieving a screen-touch function without modifying the structure of the pen holder of existing gel-ink pens; the invention is simple in structure, has minor modifications on existing gel-ink pens, is convenient in use, and well realizes integrating the screen-touch function into a gel-ink pen.

## Description

### BACKGROUND OF THE INVENTION

### 1. FIELD OF THE INVENTION

The present invention relates to a pen for writing, and more particularly to a gel-ink pen having screen-touch function.

### 2. DESCRIPTION OF RELATED ART

The pen is a tool for handwriting by people. Typically, a gel-ink pen is used for writing on paper. In recent years, with the development of touch-screen computer and touch-screen cell-phones, a screen-touch pen is used for writing on a touch screen. Currently, the widely used screen-touch pen is a capacitive screen-touch pen which necessitates that an object with static electric charges contacts the screen so as to activate a capacitively inductive system under the screen. When an insulating object or an object with no static electric charges contacts the capacitive touch-screen, no induction will be generated to activate the capacitively inductive system. At present, the commonly used capacitive touch-screen in the art is electroplated with a layer of conductive metal on the housing thereof. The hand of user carries static electric charges. When the hand contacts the conductive housing of the screen-touch pen, the screen is further touched through an electrical conduction via the housing so that the capacitively inductive system under the screen is activated, thus enabling operations on the screen.

In actual use, users may have to write on both the paper and the screen frequently and thus switches use between the paper and the screen frequently. Then, the gel-ink pen and screen-touch pen in their hand have to be exchanged constantly, making the writing not handy enough. Moreover, it is also required to carry two pens, thus causing inconvenience.

How to integrate the function of a screen-touch pen for writing on a screen into a gen-ink pen for writing on a paper so as to facilitate writing by user becomes a problem that needs to be solved urgently.

### 3. BRIEF SUMMARY OF THE INVENTION

In order to overcome the disadvantages of the prior art, the invention provides a gel-ink pen having a screen-touch function, which integrates a conductor having a length and electroplated with a metal layer into an interior of pen holder of the gel-ink pen, achieving a screen-touch function without modifying the structure of the pen holder of existing gel-ink pens; the invention is simple in structure, has minor modifications on existing gel-ink pens, is convenient in use, and well realizes integrating the screen-touch function into a gel-ink pen.

The following technical solutions are adopted by the invention in order to realize the above object of the invention.

A gel-ink pen having a screen-touch function comprises a pen holder and a pen refill disposed inside of the pen-holder, and further comprises a screen-touch portion provided on the pen-holder, the screen-touch portion comprising a conductor having a length and provided inside of the pen holder and a rubber mat which is sleeved over the bottom of the conductor and exposed outside of the pen-holder.

Further, the length of the conductor is arranged to ensure that wherever the hand of user holds on the pen-holder, the static electric charges on the hand of user can be inducted.

Further, the conductor is electroplated with a metal layer so as to realize conduction of electric charges.

Further, the conductor is provided with an assembly portion at the bottom, over which the rubber mat is sleeved, and the screen-touch portion further comprises a ferrule for fixing the rubber mat, wherein the ferrule is sleeved over the rubber mat such that the rubber mat is partially exposed outside of the ferrule so as to touch the screen.

Further, the conductor is a hollow body and the pen refill can be partially assembled into the conductor.

Further, the head portion of the pen refill is of a diamond shape.

Further, a pen cap is also included, the head portion of which is provided with a rubber head for erasing handwriting, and the material of the rubber head is thermoplastic rubber.

Further, the pen refill can be automatically protruded out and retracted inside of the pen holder, a rubber head is provided at the head portion of the pen holder; when the pen tip is retracted inside of the pen holder, the rubber head of the head portion of the pen holder can be used to erase handwriting; the material of the rubber head is thermoplastic rubber.

Since the invention employs the above described technical solutions, in which a conductor having a length and electroplated with a metal layer is provided inside of the pen holder of the gel-ink pen, the conductor has a sufficient length so that an electric charge induction distance is lengthened for ensuring that the static electric charges on user's hand can be inducted, resulting in the advantageous technical effect of realizing a screen-touch function on the basis of pen holder of existing gel-ink pen.

### 4. BRIEF DESCRIPTION OF THE DRAWINGS

FIG. 1 shows a perspective assembly view of a gel-ink pen having screen-touch function according to the invention;
FIG. 2 shows a perspective exploded view of the gel-ink pen having screen-touch function according to the invention; and
FIG. 3 shows a partial perspective assembly view of the gel-ink pen having screen-touch function according to the invention.

Notes of reference signs:
- pen holder: 1
- pen refill: 2
- refill head: 21
- pen cap: 4
- rubber head: 41
- conductor: 5
- assembly portion: 51
- ferrule: 6
- rubber mat: 7
- screen-touch portion: 8
- gel-ink pen having screen-touch function: 10

### 5. DETAILED DESCRIPTION OF THE PREFERRED EMBODIMENT

The invention will be further described below with reference to the accompanying drawings.

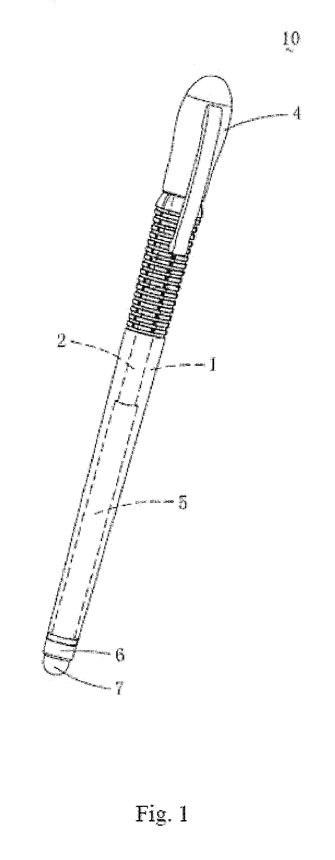

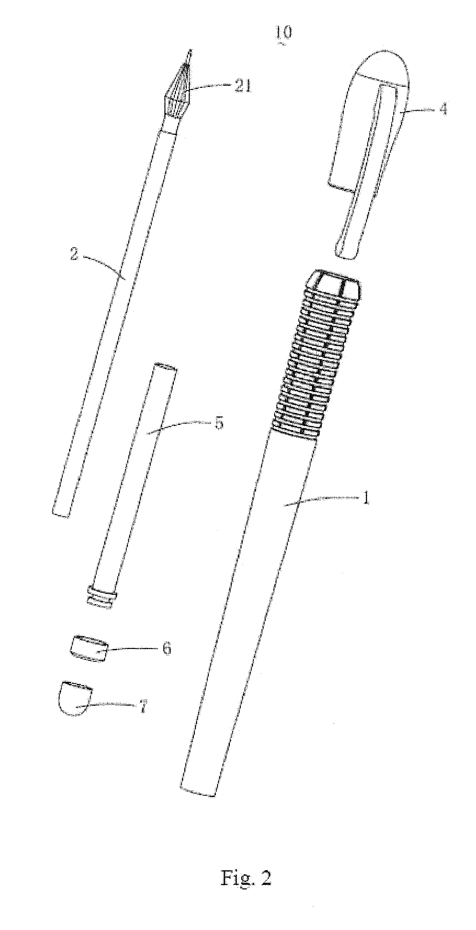

With reference to Figs. 1 and 2, the gel-ink pen 10 having a screen-touch function according to the invention comprises a pen holder 1, a pen refill 2, a pen cap 4 and a screen-touch portion 8.

The pen holder 1 is a plastic pen holder with a very thin wall. The pen refill 2 is provided with a refill head 21 having a diamond shape. The ink inside the pen refill 2 consists of three components: a chromogenic material, a color developing agent and a color-changing temperature regulating agent. At normal temperatures, the chromogenic material is bonded with the color developing agent to generate a color. However, when the temperature rises above a certain critical temperature, the color-changing temperature regulating agent will function to stop the bond of the chromogenic material and the color developing agent so as to make the color disappear, which will not be restored even at normal temperatures. The head portion of the pen cap 4 is provided with a rubber head 41 which is made of a material of known thermoplastic rubber (TPR). When there is an error in handwriting, the rubber head 41 on the head portion of the pen cap will be used at the erroneous handwriting in an action of friction erasing, and the erroneous handwriting will be erased with the rise of temperature caused by friction.

In a preferred embodiment of the invention, the pen refill can be protruded or retracted inside of the pen holder automatically. The rubber head can be disposed on the head portion of the pen holder at a position near the pen tip of the pen refill. When the pen tip is retracted backed into the pen holder, the rubber head on the head portion of the pen holder can be used to erase the handwriting.

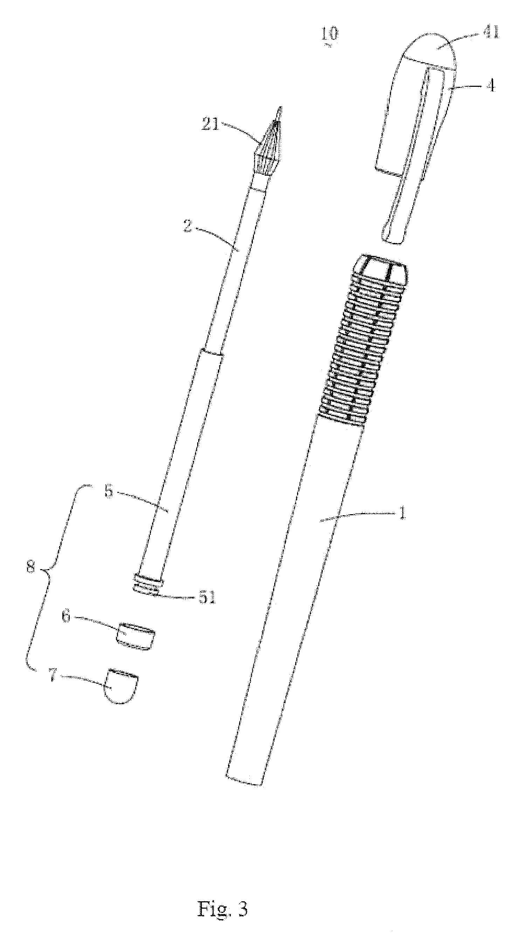

With reference to Fig. 3 the screen-touch portion 8 comprises a conductor 5 plated with a metal layer and having a length, a ferrule 6 and a rubber mat 7. The metal layer electroplated on the conductor 5 enables the conductor 5 to conduct electric charges. In the embodiment, the conductor 5 is a hollow body. Moreover, in this embodiment, the length of the conductor 5 is 6 centimeters. The length of the conductor can be also adjusted according to the actual length of pen holder. The length of the conductor 5 is set such that wherever the hand of user holds on the pen holder, it can be ensured that the static electric charges can be inducted. The pen refill 2 can be partially assembled into the conductor 5. The bottom of the conductor 5 is provided with an assembly portion 51. The ferrule 6 is a metal ferrule.

During assembly, the pen refill 2 is firstly assembled into the pen holder 1 from the head portion of the pen holder 1. Then, the conductor 5 is assembled into the pen holder 1 from a tail portion of the pen holder 1 so that the pen refill 2 is partially assembled into the conductor 5. Then, the rubber mat 7 is sleeved over the assembly portion 51 of the conductor 5. In order to fix the rubber mat 7, the ferrule 6 is finally sleeved over the rubber mat 7 so that the rubber mat is partially exposed outside of the ferrule for touching the screen. When not in use, the pen cap 4 is sleeved over the pen holder.

When it is required to use the gel-ink pen to write, the pen cap can be removed so as to enable direct writing; and if there is any erroneous handwriting occurred, the rubber head 41 on the pen cap can be used to erase the handwriting.

When it is required to use the screen-touch function, the hand of user holds any position of the pen holder 1 and touches the screen, and the capacitively inductive system under the screen can be activated to realize the screen-touch operation. The screen-touch function is realized in that the hand of user carries static electric charges, whereas the wall of the plastic pen holder 1 is very thin, and the conductor 5 is long enough to lengthen an electric charge induction distance so that the static electric charges on the hand of user can be completely induced onto the conductor 5 to activate the screen, thus enabling the screen-touch function.

The technical scope of the invention is not limited to the above description. Those skilled in the art can make various modifications and variations to the above embodiments without departing from the technical ideas of the invention, which should all be considered as falling within the scope of the invention.

## Claims

1. A gel-ink pen having a screen-touch function, comprising a pen holder and a pen refill disposed inside of the pen-holder, and further comprising a screen-touch portion provided on the pen-holder, the screen-touch portion comprising a conductor having a length and provided inside of the pen holder and a rubber mat which is sleeved over the bottom of the conductor and exposed outside of the pen-holder.

2. The gel-ink pen having a screen-touch function according to claim 1, wherein the length of the conductor is arranged to ensure that wherever the hand of user holds on the pen-holder, the static electric charges on the hand of user can be inducted.

3. The gel-ink pen having a screen-touch function according to claim 2, wherein the conductor is electroplated with a metal layer so as to realize conduction of electric charges.

4. The gel-ink pen having a screen-touch function according to claim 3, wherein the conductor is provided with an assembly portion at the bottom, over which the rubber mat is sleeved, and the screen-touch portion further comprises a ferrule for fixing the rubber mat, and wherein the ferrule is sleeved over the rubber mat such that the rubber mat is partially exposed outside of the ferrule so as to actuate the screen.

5. The gel-ink pen having a screen-touch function according to claim 4, wherein the conductor is a hollow body and the pen refill can be partially assembled into the conductor.

6. The gel-ink pen having a screen-touch function according to claim 1, wherein the head portion of the pen refill is of a diamond shape.

7. The gel-ink pen having a screen-touch function according to claim 1, wherein a pen cap is also included, the head portion of which is provided with a rubber head for erasing handwriting, and the material of the rubber head is thermoplastic rubber.

8. The gel-ink pen having a screen-touch function according to claim 1, wherein the pen refill can be automatically protruded out and retracted inside of the pen holder, a rubber head is provided at the head portion of the pen holder; when the tip of pen is retracted inside the pen holder, the rubber head of the head portion of the pen holder can be used to erase handwriting; the material of the rubber head is thermoplastic rubber.
